# EUROPEAN PATENT SPECIFICATION

(11) **EP 1 378 168 B1**
(45) Date of publication and mention of the grant of the patent: **13.09.2006**
(21) Application number: 03014500.7
(22) Date of filing: 03.07.2003
(51) Int. Cl.: A21D 2/18, A23L 1/236, A21D 13/08

(54) **Alpha-D-glucopyranosyl-1,6-sorbitol comprising dough for foam baked product and process for manufacturing the same**
Alpha-D-glucopyranosyl-1,6-sorbitol enthaltender Teig für Backwaren und deren Herstellung
Pâte contenant du alpha-D-glucopyranosyl-1,6-sorbitol pour produit de boulangerie et procédé de préparation du dit produit

(30) Priority: 03.07.2002 JP 2002194809
(43) Date of publication of application: 07.01.2004
(73) Proprietor: Kabushiki Kaisha Ueno Seiyaku Oyo Kenkyujo, Osaka-shi Osaka-fu (JP)
(72) Inventor: Ueno, Ryuzo, Nishinomiya-shi, Hyogo-ken (JP); Honda, Junya, Nishinomiya-shi, Hyogo-ken (JP); Arai, Sho, Nishinomiya-shi, Hyogo-ken (JP); Hasegawa, Shoko, Ashiya-shi, Hyogo-ken (JP)
(74) Representative: Albrecht, Thomas

(56) References cited:
- EP-A- 0 434 025
- EP-A- 1 172 370
- EP-A- 1 438 902
- WO-A-01/15545
- WO-A-91/00016
- WO-A-92/06601
- DE-A- 19 532 396
- US-A- 5 578 339

## Description

### Technical Field

The present invention relates to aerated dough comprising a lot of air bubbles for foam type baked product such as sponge cake and method for manufacturing baked product with the dough.

### Background Art

Foam type baked goods with porous structure and high volume such as foam cakes, including sponge cake and chiffon cake, butter cake and *Castella,* are manufactured by baking a dough which contains many tiny air bubbles. That is, the air bubbles in the dough will expand in the hot oven to give a porous structure and high volume. In preparing such a baked product as above, condition of the air bubbles in the dough is a key factor for palatable texture of the product. Light and fluffy dough entrapping enough air bubbles can provide a product having high volume with pleasant texture. To the contrary, dense dough containing less air bubbles provides the one having low volume with poor texture.

However, air bubbles entrapped in the dough are unstable and tend to disappear in a short time. Therefore, once obtained light and fluffy dough may immediately turn to heavy and sticky. It is very difficult to retain the lightness of the dough which comprising enough tiny air bubbles for a long time. To produce a foam type cake with a porous structure, high volume and palatable texture, light and fluffy dough containing a lot of air bubbles must be baked immediately after the dough preparation. That is, the foam instability of the dough has been a factor for the quality of the baked product.

Sugar, the most common sweetener used in conventional baked products, also contributes to stabilize air bubbles incorporated in the dough through its water-holding capacity and viscosity. However, the air bubble-stabilizing effect of sugar is not so strong that it cannot retain the air bubbles in the dough for a long time. That is, air bubbles in the sugar-containing dough are still unstable and the fluffiness of the dough will be lost in a short time. Since less amount of sucrose means less stability of the dough, recent trend for low-sweetness food products makes it more difficult to provide fluffy dough with good shelf-stability. Emulsifiers are often used to increase the fluffiness of the dough, but they sometimes affect badly on the taste of the resulting baked product.

International patent application WO 92/06601 discloses a baked cake composition comprising Palatinit® in an amount which is greater than 20% of the total sweeteners. Furthermore, European patent application 0 434 025 discloses extruded crispies comprising Palatinit® . Palatinit® is a hydrogenation product of isomaltulose which consists of a substantially equimolar mixture of α-D-glucopyranosyl-1,6-sorbitot and α-D-glucopyranosyl-1,1-mannitol.

### SUMMARY OF THE INVENTION

An object of the invention is to improve foam-stability of a dough containing a lot of air bubbles for foam type baked product. Another object of the invention is to provide foam type baked product with improved texture. Further object of the present invention is to provide a method for preparing a foam type baked product with improved fluffiness and texture.

The present invention provides an aerated dough for a foam type baked product comprising at least egg, powdery component and sweeteners, wherein equal to or more than 20 wt% of total sweeteners is a sugar alcohol composition, and said sugar alcohol composition comprises 55-100 wt% of α-D-glucopyranosyl-1,6-sorbitol, 35-0 wt% of α-D-glucopyranosyl-1,1-mannitol and 10-0 wt% of α-D-glucopyranosyl-1,1-sorbitol on a dry weight basis.

The present invention further provides a foam type baked product obtained by baking the dough defined as above.

The present invention also provides a method for manufacturing a foam type baked product comprising the steps providing the dough defined as above and baking the same.

In the present specification and claims, the "foam type baked product" represents baked goods product with porous structure and high volume, which is prepared by baking a dough with many tiny air bubbles comprising at least egg, powdery material such as flour and a sweetener. Examples of the foam type baked product may include foam cakes such as sponge cake, souffle and chiffone cake, butter cake, castella and the like.

In the present specification and claims, the "aerated dough" represents dough for a foam type baked product in which a lot of tiny air bubbles are entrapped.

According to the present invention, foam stability of the aerated dough containing a lot of tiny air bubbles is improved while keeping the sweet level comparative to, or even less than, the conventional baked product prepared by using sucrose as sole sweetener. The baked goods dough provided by the instant invention exhibits excellent foam-stability and provides a foam type baked goods product with an excellent appearance and texture.

### Best Mode for Carrying Out the Invention

The sugar alcohol composition used in the present invention comprises 55-100 wt% of α-D-glucopyranosyl-1,6-sorbitol (hereinafter, referred as "GPS-6), 0-35% wt% of α-D-glucopyranosyl-1,1-mannitol (hereinafter, referred as "GPM") and 0-10 wt % of α-D-glucopyranosyl-1,1-sorbitol (hereinafter, referred as "GPS-1"), based on total amount of GPS-6, GPM and GPS-1 on a dry weight basis.

GPS-6, GPM and GPS-1 can be prepared by hydrogenating a mixture of isomaltulose and trehalulose, which is obtained from sucrose by means of a transferase enzyme. Hydrogenation of isomaltulose gives GPS-6 and GPM, and trehalulose gives GPS-1 and GPM.

The sugar alcohol composition of the instant invention comprising GPS-6, GPS-1 and GPM in the specified proportions may be prepared from thus obtained mixture of GPS-6, GPM and GPS-1 by separating the respective compound by means of crystallization or chromatography, and then adjusting the proportions. The sugar alcohol composition may also be prepared from commercially available reduced isomaltulose product, such as Palatinit^{™} (Shin Mitsui Sugar Co. Ltd., Tokyo, Japan) and IsoMaltidex^{™} (Cerestar Japan Ltd., Tokyo, Japan), consisting essentially of approximately equimolar GPS-6 and GPM, in the same manner as above. The sugar alcohol composition of the invention may be prepared by simply mixing commercially available GPS-6, GPM and GPS-1 to give the above-defined proportions.

The sugar alcohol composition used in the present invention may further comprise one or more sugar alcohols other than GPS-6, GPM or GPS-1, for example, sorbitol and maltitol up to 10 wt% based on the total amount of the composition on a dry weight basis.

The sugar alcohol composition used in the present invention may be provided in any form including solution, crystal, powder and granule, and crystalline, granular or powdery composition are especially preferable since they are easy to handle.

According to the present invention, at least 20 wt% of total sweeteners contained in the dough is the sugar alcohol composition of the present invention. That is, according to the present invention, a conventional dough can be improved by substituting at least a part of sweeteners contained in the dough with a sugar alcohol composition, wherein said sugar alcohol composition comprises 55-100 wt% of GPS-6, 35-0 wt% of GPM and 10-0 wt% of GPS-1 on a dry weight basis.

The amount of the sugar alcohol composition in the dough is at least 20 wt%, preferably at least 25 wt% based on the total amount of sweeteners contained in the dough. The amount may vary depending on types of baked product to be prepared and desired sweetness of the product. For example, in a conventional baked product dough comprising sugar as sole sweetener, up to 25 wt% by weight of the sweetener may be substituted by the sugar alcohol composition of the invention to provide a dough comprising stable air-bubbles which gives product with substantially same sweetness as the original product. When up to 50 wt% by weight of sucrose is substituted with the sugar alcohol composition of the invention, resulting product gives semi-sweet and light taste. Further, when all of the sucrose is substituted with the sugar alcohol composition, resulting product will give less-sweet taste and contribute to fewer calories.

According to the present invention, as long as at least 20 wt% of total sweeteners in a dough is the sugar alcohol composition of the invention comprising 55-100 wt% of GPS-6, 35-0 wt% of GPM and 10-0 wt% of GPS-1 on a dry weight basis, the air bubbles entrapped in the dough become stable. The dough may contain other sweeteners in addition to the composition of the present invention. The proportions between other sweeteners including sucrose and the sugar alcohol composition of the invention may vary depending on the type of baked product, desired sweetness and the purpose of the baked product. Examples of the other sweeteners may include those known as strong-sweeteners such as stevia and scuralose.

According to the invention, the total amount of the sweeteners to be added to the dough may be determined by the art depending on the type of the baked product to be prepared and the purpose of the product such as for low calorie cakes and the like. Typically, the total amount of the sweeteners in a dough for a foam type baked product may be about 15-45 wt% of the total amount of the dough.

The improved dough of the present invention can be obtained from a conventional dough for foam type baked product, which comprises at least eggs, powdery component and a sweetener, by substituting at least a part of the sweetener contained in the dough with the sugar alcohol composition specified in the present invention. The dough of the preset invention may comprise any ingredient known to be incorporated in a conventional foam type baked product, in addition to the sugar alcohol composition specified in the present invention. Examples of "foam type baked product" may include sponge cake, chiffon cake, butter cake, souffle, and castella.

The egg in the dough may be any of egg white, egg yoke and whole egg as well as mixture of egg white and egg yoke in a certain ratio.

Examples of the powdery component may include flour ground from wheat, barley, rye, corn, rice, buckwheat, millet, foxtail millet and Japanese barnyard millet, starchy component such as potato flake, potato flour, corn starch and tapioca starch. The powdery component may comprise ground nuts.

The dough of the present invention may further comprise fat and oil, such as butter, margarine, shortening and vegetable oils. The dough may further contain any other ingredient added to a conventional foam type baked goods product, based on types and purpose of the product according to known proportions.

The dough of the present invention contains a lot of tiny air bubbles, and the air bubbles will expand in a hot oven giving the baked goods product its volume and structure. The method for entrapping air bubbles in the dough is not limited and may be any of conventional procedure known to the art.

For example, air may be whipped into eggs prior to add other ingredients. The eggs may be beaten by either whole egg method or separated egg method. In whole egg method, whole eggs admixed with at least a part of the sweeteners are beaten to give whipped egg and then powder component and other ingredient are folded into the whipped egg. In separated egg method, egg yolks and egg whites are separated, beaten respectively and then folded together with other ingredients. In separated egg method, at least a part of sweeteners may be admixed with both of egg yolks and egg whites. Further, all-in-mix method, which comprises beating a mixture of whole ingredients including powder component, egg, sweetener and other ingredients all at once may be employed to give the dough of the present invention.

The conditions for beating eggs or dough mixture may be optimized by the art according to conventional procedure for manufacturing a baked product.

The dough of the present invention is excellent in foam stability. Therefore, the dough can provide a baked goods product with porous structure, high volume and preferable texture even if it takes a relatively long time from preparation of the dough to baking the same.

According to the present invention, the baked product may be obtained by baking thus obtained dough. The baking condition, i.e. baking temperature, baking time and the like may be determined depending on types of the product along with the conventional manner.

The present invention will be understood more readily with reference to the following examples. However, these examples are intended only to illustrate the invention and are not to be construed to limit the scope of the invention. In the following examples, "%" represent "wt%" except for otherwise specified.

### Examples 1 and 2

### Manufacture of Sponge Cake

Sponge cake dough was prepared using the ingredients shown in table 1 below. Fresh whole eggs were put in a bowl over a water bath at 40°C to heat the eggs approximately at 37°C. The eggs were beaten for 30 seconds with electric mixer (#MK-H3, Matsushita Electric Industries Co., Ltd. Osaka, Japan) and white superior soft sugar (Shin Mitsui Sugar Co., Ltd Tokyo, Japan) and/or sugar alcohol composition shown in table 2 below were added to the eggs respectively. The mixture was further beaten until the relative density of the same reaches 0.26-0.27. Sifted soft flour was added in the mixture in three batches and worked with plastic spatula to fold the flour into the mixture. The relative density of the resulting dough was within the range of 0.44-0.45. Immediately after the preparation, each of the dough was poured in a cake mold and baked at 170°C for 30 minutes to give sponge cake.

The relative density of the beaten eggs or the dough was determined by pouring the sample into a plastic container of 9 cm in diameter and 241.7 ml in volume, leveling the surface, weighting the content and dividing the weight by the volume to give the relative density.

### Comparative Examples 1-3

Sponge cakes of comparative example 1-3 were prepared using the ingredients shown in table 1 below according to the same manner as above. In comparative Examples 1 and 2, commercially available Palatinit^{™} consisting essentially of approximately equimolar GPS-6 and GPM was used as sugar alcohol composition. In comparative example 3, sugar was used as sole sweetener.

**TABLE 1**

| Formulation of Sponge Cake Dough | | | | | | |
|---|---|---|---|---|---|---|
| | | Example | | Comparative Example. | | |
| | | 1 | 2 | 1 | 2 | 3 |
| Ingredient (%) | soft flour | 30 | 30 | 30 | 30 | 30 |
| | whole egg | 46 | 46 | 46 | 46 | 46 |
| | white superior soft sugar | 18 | 0 | 18 | 0 | 24 |
| | sugar alcohol composition | 6 | 24 | 6 | 24 | 0 |
| proportion of GPS-6 in the sugar alcohol composition (%) | | 69.2 | 69.2 | 47.5 | 47.5 | - |
| proportion of the sugar alcohol composition based on total sweeteners^{*1} (%) | | 25 | 100 | 25 | 100 | 0 |

| | | | | | | |
|---|---|---|---|---|---|---|
| *1 Total sweeteners is consisting of white superior soft sugar and sugar alcohol composition. | | | | | | |

**TABLE 2**

| Sugar alcohol composition | | |
|---|---|---|
| (% on a dry weight basis) | | |
| | Example 1,2 | Comparative Example 1,2 |
| GPS-6 | 69.2 | 47.5 |
| GPM | 17.3 | 51.7 |
| GPS-1 | 5.5 | 0.1 |
| sorbitol | 6.7 | 0.1 |
| Others⁻² | 1.3 | 0.6 |

| | | |
|---|---|---|
| *2: consisting of other sugar alcohols such as mannitol | | |

### Foam-Stability of the Sponge Cake Dough 1

### Stability of the dough density

### Method

Change of the relative density with time was observed to determine foam stability of the dough. Smaller change of the relative density means higher foam-stability. The relative density of the respective dough obtained in the examples and comparative examples was determined immediately after the preparation, and at 1-hour and 3-hours after the preparation. The dough was put in a stainless bowl, sealed with plastic wrap, and allowed to stand at 25 °C for 1 and 3 hours before the measurement.

### Result

Results are shown in table 3 below. The relative densities of examples 1 and 2 were relatively stable than those of comparative examples 1-3.

### Foam-Stability of the Sponge Cake Dough

### Stability in the cake volumes

Sponge cake dough of examples 1, 2 and comparative examples 1-3 immediately after the preparation and that after stood for 3 hours at 25°C were baked at 170°C for 30 minutes respectively. Volume of thus obtained cake was measured and compared to determine the volume-reduction ratio with time. The smaller volume-reduction ratio means the higher form-stability of the dough.

The volume of the baked sponge cake was measured with millet seeds. Firstly, a container larger than the respective sponge cakes was filled with millet seeds and leveled over the surface. The volume of millet seeds larger than the sponge cake were removed from the container, the sponge cake sealed with plastic wrap was put in the container, then the remaining gaps were filled with the millet seeds once removed from the container. After leveled over the surface, volume of the millet seeds outside the container was determined by means of graduated cylinder to give the volume of the sponge cake.

### Result

As shown in table 3 below, sponge cakes of examples 1 and 2 exhibited smaller volume-reduction ratio than that of comparative example 3, which was prepared by using sucrose as sole sweetener. Sponge cakes of examples 1 and 2 also exhibited better fluffiness than the sponge cakes of comparative examples 1 and 2, which were prepared by using Palatinit^{™} comprising essentially of approximately equimolar of GPS-6 and GPM as sugar alcohol composition.

**TABLE 3**

| Result of foam-stability test | | | | | | |
|---|---|---|---|---|---|---|
| | | Example | | Comparative Example | | |
| | | 1 | 2 | 1 | 2 | 3 |
| Relative density density of the dough | immediately after the preparation | 0.44 | 0.43 | 0.43 | 0.44 | 0.44 |
| | after 1 hour | 0.47 | 0.45 | 0.49 | 0.48 | 0.49 |
| | after 3 hour | 0.51 | 0.49 | 0.53 | 0.54 | 0.53 |
| Volume of baked cake | volume reduction ratio(%) | 13 | 8 | 19 | 25 | 26 |

### Examples 3-5 and Comparative examples 4 and 5

Sponge cakes were prepared using the ingredient shown in table 4 according to the same manner as Example 1.

**Ta ble 4**

| Ingredients of Sponge Cake Dough | | | | | | |
|---|---|---|---|---|---|---|
| | | Example | | | Comparative Example | |
| | | 3 | 4 | 5 | 4 | 5 |
| Ingredient (%) | soft flour | 30 | 30 | 30 | 30 | 30 |
| | whole egg | 46 | 46 | 46 | 46 | 46 |
| | white superior soft sugar | 18 | 12 | 0 | 21.6 | 20.4 |
| | sugar alcohol composition | 6 | 12 | 24 | 2.4 | 3.6 |
| proportion of GPS-6 in the sugar alcohol composition (%) | | 55.5 | 55.5 | 55.5 | 55.5 | 55.5 |
| proportion of the sugar alcohol composition based on total sweeteners^{*1}(%) | | 25 | 50 | 100 | 10 | 15 |

| | | | | | | |
|---|---|---|---|---|---|---|
| *1 Total sweeteners is consisting of white superior soft sugar and sugar alcohol composition. | | | | | | |

In the examples 3-5 and comparative examples 4 and 5, same sugar alcohol composition shown in table 5 was used.

**Table 5**

| Ingredients of Sugar alcohol composition | |
|---|---|
| (% on a dry weight basis) | |
| GPS-6 | 55.5 |
| GPM | 32.4 |
| GPS-1 | 4.4 |
| Sorbitol | 6.5 |
| Others^{*2} | 1.2 |

| | |
|---|---|
| *2: consisting of other sugar alcohols such as mannitol | |

The foam-stability test including measurement of relative density of the dough and volume of the sponge cake were carried out according to the above-described manner. Results are shown in table 6.

**TABLE 6**

| Result of foam-stability test | | | | | | |
|---|---|---|---|---|---|---|
| | | Example | | | Comp. Ex. | |
| | | 3 | 4 | 5 | 4 | 5 |
| Relative density of the dough | immediately after the preparation | 0.44 | 0.43 | 0.44 | 0.44 | 0.44 |
| | after 1 hour | 0.45 | 0.46 | 0.46 | 0.48 | 0.49 |
| | after 3 hour | 0.50 | 0.49 | 0.51 | 0.53 | 0.54 |
| Volume of baked cake | volume reduction ratio(%) | 20 | 19 | 19 | 23 | 24 |

Although the same sugar alcohol composition as examples 3-5 was used in comparative examples 4 and 5, the amount of the composition to total sweeteners was less than 20%. As a result, cake volume-reduction ratio of comparative examples 4 and 5 was higher than examples 3-5.

## Claims

1. An aerated dough for a foam type baked product, wherein equal to or more than 20 wt% of total sweeteners in the dough is a sugar alcohol composition, and said sugar alcohol composition comprises 55-100 wt% of α-D-glucopyranosyl-1,6-sorbitol, 35-0 wt% of α-D-glucopyranosyl-1,1-mannitol and 10-0 wt% of α-D-glucopyranosyl-1,1-sorbitol on a dry weight basis.

2. A foam-type baked product obtained by baking an aerated dough, wherein equal to or more than 20 wt% of total sweeteners in the dough is a sugar alcohol composition, and said sugar alcohol composition comprises 55-100 wt% of α-D-glucopyranosyl-1,6-sorbitol, 35-0 wt% of α-D-glucopyranosyl-1,1-mannitol and 10-0 wt% of α-D-glucopyranosyl-1,1-sorbitol on a dry weight basis.

3. A method for manufacturing a foam-type baked product comprising the steps of
providing an aerated dough, wherein equal to or more than 20 wt% of total sweeteners in the dough is a sugar alcohol composition, and said sugar alcohol composition comprises 55-100 wt% of α-D-glucopyranosyl-1,6-sorbitol, 35-0 wt% of α-D-glucopyranosyl-1,1-mannitoland 10-0 wt% of α-D-glucopyranosyl-1,1-sorbitol on a dry weight basis, and
baking the aerated dough.

4. The aerated dough of Claim 1, wherein said dough comprises at least egg, powdery component and sweeteners.

5. The foam type baked product of Claim 2, wherein said dough comprises at least egg, powdery component and sweeteners.

6. The method of Claim 3, wherein said dough comprises at least egg, powdery component and sweeteners.

7. The aerated dough of Claim 1, wherein said baked product is selected from sponge cake, soufflé, chiffone cake, butter cake and castella.

8. The foam-type baked product of Claim 2, wherein said baked product is selected from sponge cake, soufflé, chiffone cake, butter cake and castella.

9. The method of Claim 3, wherein said baked product is selected from sponge cake, soufflés, chiffone cake, butter cake and castella.

## Patentansprüche

1. Lufthaltiger bzw. aufgelockerter Teig für ein gebackenes Produkt vom Schaum-Typ, wobei gleich viel wie oder mehr als 20 Gew.-% der gesamten Süßungsmittel in dem Teig eine Zuckeralkoholzusammensetzung ist und die Zuckeralkoholzusammensetzung 55-100 Gew.-% α-D-Glucopyranosyl-1,6-sorbit, 35-0 Gew.-% α-D-Glucopyranosyl-1,1-mannit und 10-0 Gew.-% α-D-Glucopyranosyl-1,1-sorbit auf einer Trockengewichtsbasis umfasst.

2. Gebackenes Produkt vom Schaum-Typ, erhalten durch Backen eines lufthaltigen bzw. aufgelockerten Teigs, wobei gleich viel wie oder mehr als 20 Gew.-% der gesamten Süßungsmittel in dem Teig eine Zuckeralkoholzusammensetzung ist und die Zuckeralkoholzusammensetzung 55-100 Gew.-% α-D-Glucopyranosyl-1,6-sorbit, 35-0 Gew.-% α-D-Glucopyranosyl-1,1-mannit und 10-0 Gew.-% α-D-Glucopyranosyl-1,1-sorbit auf einer Trockengewichtsbasis umfasst.

3. Verfahren zum Herstellen eines gebackenen Produkts vom Schaum-Typ, umfassend die Schritte des Bereitstellen eines lufthaltigen bzw. aufgelockerten Teigs, wobei gleich viel wie oder mehr als 20 Gew.-% der gesamten Süßungsmittel in dem Teig eine Zuckeralkoholzusammensetzung ist und die Zuckeralkoholzusammensetzung 55-100 Gew.-% α-D-Glucopyranosyl-1,6-sorbit, 35-0 Gew.-% α-D-Glucopyranosyl-1,1-mannit und 10-0 Gew.-% α-D-Glucopyranosyl-1,1-sorbit auf einer Trockengewichtsbasis umfasst, und
Backen des lufthaltigen bzw. aufgelockerten Teigs.

4. Lufthaltiger bzw. aufgelockerter Teig nach Anspruch 1, wobei der Teig mindestens Ei, Pulverkomponente und Süßungsmittel umfasst.

5. Gebackenes Produkt vom Schaum-Typ nach Anspruch 2, wobei der Teig mindestens Ei, Pulverkomponente und Süßungsmittel umfasst.

6. Verfahren nach Anspruch 3, wobei der Teig mindestens Ei, Pulverkomponente und Süßungsmittel umfasst.

7. Lufthaltiger bzw. aufgelockerter Teig nach Anspruch 1, wobei das gebackene Produkt ausgewählt ist aus Rührkuchen bzw. Biskuit, Soufflé, Chiffon-Kuchen, Butterkuchen und Castella.

8. Gebackenes Produkt vom Schaum-Typ nach Anspruch 2, wobei das gebackene Produkt ausgewählt ist aus Rührkuchen bzw. Biskuit, Soufflé, Chiffon-Kuchen, Butterkuchen und Castella.

9. Verfahren nach Anspruch 3, wobei das gebackene Produkt ausgewählt ist aus Rührkuchen bzw. Biskuit, Soufflé, Chiffon-Kuchen, Butterkuchen und Castella.

## Revendications

1. Pâte aérée pour un produit cuit de type mousse, dans laquelle une composition d'alcool de sucre est égale ou supérieure à 20 % en poids des édulcorants totaux dans la pâte, et ladite composition d'alcool de sucre comprend 55 à 100 % en poids d'α-D-glucopyranosyl-1,6-sorbitol, 35 à 0 % en poids d'α-D-glucopyranosyl-1,1-mannitol et 10 à 0 % en poids d'α-D-glucopyranosyl-1,1-sorbitol sur une base de poids sec.

2. Produit cuit de type mousse obtenu en cuisant une pâte aérée, dans lequel une composition d'alcool de sucre est égale ou supérieure à 20 % en poids des édulcorants totaux dans la pâte, et ladite composition d'alcool de sucre comprend 55 à 100 % en poids d'α-D-glucopyranosyl-1,6-sorbitol, 35 à 0 % en poids d'α-D-glucopyranosyl-1,1-mannitol et 10 à 0 % en poids d'α-D-glucopyranosyl-1,1-sorbitol sur une base de poids sec.

3. Procédé de fabrication d'un produit cuit de type mousse comprenant les étapes consistant à
former une pâte aérée, dans laquelle une composition d'alcool de sucre est égale ou supérieure à 20 % en poids des édulcorants totaux dans la pâte, et ladite composition d'alcool de sucre comprend 55 à 100 % en poids d'α-D-glucopyranosyl-1,6-sorbitol, 35 à 0 % en poids d'α-D-glucopyranosyl-1,1-mannitol et 10 à 0 % en poids d'α-D-glucopyranosyl-1,1-sorbitol sur une base de poids sec, et
cuire la pâte aérée.

4. Pâte aérée selon la revendication 1, dans laquelle ladite pâte comprend au moins un oeuf, un composant en poudre et des édulcorants.

5. Produit cuit de type mousse selon la revendication 2, dans lequel ladite pâte comprend au moins un oeuf, un composant en poudre et des édulcorants.

6. Procédé selon la revendication 3, dans lequel ladite pâte comprend au moins un oeuf, un composant en poudre et des édulcorants.

7. Pâte aérée selon la revendication 1, dans laquelle ledit produit cuit est choisi parmi un gâteau éponge, un soufflé, un gâteau mousseline, un gâteau au beurre et un castella.

8. Produit cuit de type mousse selon la revendication 2, dans lequel ledit produit cuit est choisi parmi un gâteau éponge, un soufflé, un gâteau mousseline, un gâteau au beurre et un castella.

9. Procédé selon la revendication 3, dans lequel ledit produit cuit est choisi parmi un gâteau éponge, des soufflés, un gâteau mousseline, un gâteau au beurre et un castella.
